# EUROPEAN PATENT SPECIFICATION

(11) **EP 2 315 531 B1**
(45) Date of publication and mention of the grant of the patent: **24.10.2012**
(21) Application number: 09789035.4
(22) Date of filing: 30.07.2009
(51) Int. Cl.: A23K 1/16, A23K 1/18, A01K 85/01

(54) **FISH FEEDING STIMULANT**
STIMULATIONSMITTEL FÜR DIE FUTTERAUFNAHME BEI FISCHEN
STIMULANT POUR L'ALIMENTATION DES POISSONS

(30) Priority: 30.07.2008 US 137378 P; 14.08.2008 US 188974 P
(43) Date of publication of application: 04.05.2011
(73) Proprietor: Mills, Patrick, Plainfield, IL 60544 (US)
(72) Inventor: Mills, Patrick, Plainfield, IL 60544 (US)
(74) Representative: Moore, Barry
(86) International application number: PCT/US2009/004390
(87) International publication number: WO 2010/014228

(56) References cited:
- WO-A1-85/05014
- CA-A1- 1 149 665
- CN-A- 1 125 507
- GB-A- 1 466 003
- US-A- 4 731 247
- US-A- 4 752 480
- US-A- 5 171 587
- US-A1- 2004 088 901
- US-A1- 2006 143 971

## Description

### SUMMARY

The present teaching is directed to feeding stimulant for fish as detailed in claim 1. [02] The invention in one implementation encompasses a fish feeding stimulant. The fish feeding stimulant comprises a host media that comprises an amino acid component with a dominant amino acid. The host media is configured to release the dominant amino acid with a predetermined flux rate into an aqueous environment upon placement of the host media in the aqueous environment. The predetermined flux rate is selected to provide a concentration of the dominant amino acid, in an area surrounding the host media, which exceeds a threshold level for an involuntary feeding response of one or more fish in the area surrounding the host media.

Another implementation of the invention encompasses a method. An amino acid component for a fish feeding stimulant is formed with a dominant amino acid. A host media is prepared with the amino acid component to configure the host media to release the dominant amino acid with a predetermined flux rate into an aqueous environment upon placement of the host media in the aqueous environment. The predetermined flux rate provides a concentration of the dominant amino acid in an area surrounding the host media which exceeds a threshold level for an involuntary fish feeding response in the area surrounding the host media.

Yet another implementation of the invention encompasses a method. A stimulatory amino acid class is selected from the group consisting of Acidic, Basic, Short Chain Neutral (SCN), and Long Chain Neutral amino acids. At least one amino acid of the stimulatory amino acid class is combined with a host media to impregnate the host media with the at least one amino acid. The host media is prepared to release the at least one amino acid with a predetermined flux rate into an aqueous environment upon placement of the host media in the aqueous environment. The predetermined flux rate is selected to provide a concentration of the stimulatory amino acid class, in an area surrounding the host media, which exceeds a threshold level for an involuntary feeding response of one or more fish in the area surrounding the host media. The use of amino acids to induce a feeding response in fish has been described in e.g., US 5 171 587 and GB 1 466 003.

### Brief Description of the Drawings

Features of example implementations of the invention will become apparent from the description, the claims, and the accompanying drawings in which:

Figure 1 is a representation of a Venn Diagram which illustrates relationships between stimulatory activity, cost-effectiveness, and solubility for various amino acids.

Figure 2 is a representation of one process flow for manufacturing stimulatory amino acid treated products.

Figure 3 is a representation of a chart of relative amino acid levels found within common foodstuffs.

Figure 4 is a representation of a chart of solubility, cost-effectiveness, and stimulatory ranking of amino acids where NR = 'Not Ranked', i.e. outside of top 5 most potent stimulatory amino acids.

Figure 5 is a representation of a chart of dissolution data for various shapes sizes of sugar block.

Figure 6 is a representation of a chart of relative dissolution rates for various shapes sizes of sugar block.

Figure 7 is a representation of a soaking procedure for impregnation of high density media with amino acids.

Figure 8 is a representation of a soaking procedure for impregnation of low density media with amino acids.

Figure 9 is a representation of media with amino acids absorbed to a predetermined depth (A) or to a substantially uniform distribution (B).

Figure 10 is a representation of diffusion of amino acids from the low density media of FIG. 8.

Figure 11 is a representation of diffusion of amino acids from the high density media of FIG. 7.

Figure 12 is a representation of one example of preparation of an encapsulated soluble media illustrating a "hard candy" mold.

Figure 13 is a representation of another example of an encapsulated soluble media illustrating a stamped mold.

Figure 14 is a representation of an end-user procedure for application of amino acids to media.

### Description:

Disclosed is the use of single, highly soluble amino acids L-Lysine HCl (LYS HCl); as feeding stimulants for a variety of commercial and/or sporting fish species. The solvated AAs are, preferentially, introduced into the fishes' environment via leaching and diffusion from preconditioned porous, permeable or soluble host media or host media products. Such media products may comprise common foodstuffs (such as feed pellets), or inert inorganic matter (such as dried clay). These treated host media subsequently give rise to, via a predetermined flux rate, a range of stimulatory AA(s) concentration(s), within the fishes' natural environment, that exceeds a threshold level required to elicit an involuntary feeding response from the fish. The host media may be formed into many alternatives, for example fish/feed pellets, foodstuff, chum, fish bait, groundbait, paste, dough, pills, tablets, or hard candy media products.

While a number of patents (US 5,171,587; US 5,720,996; US 4,930,363; US 4,693,897) and academic studies (Caprio and Byrd, 'Electrophysiological Evidence for Acidic, Basic, and Neutral Amino Acid Olfactory Receptor Sites in Catfish' and references therein) have shown that simple mixtures of AAs can elicit a strong feeding response among particular species of fish, there has to this point been no cross-over with respect to the manufacture of any analogous, commercially viable, feeding stimulant within the aquaculture, fishing or any other related industry.

The reasons for this are principally three-fold: First, many AAs are poorly suited to the rigors associated with industrial processing. Specifically, many 'free' AAs will spoil (undergo side reactions to form other compounds), or even undergo decomposition, when exposed to the elevated temperatures associated with common manufacturing procedures; while, for similar reasons, such AAs are also poorly suited to long term storage. Additionally, manufacturing costs associated with the inclusion of most commonly available pharmaceutical or food grade stimulatory AAs become prohibitive with respect to their inclusion within large scale feed manufacturing processes. Simply stated, the benefits of including such 'expensive' AAs into commercial feedstuffs outweigh the likely benefits associated with their use, thus rendering any final product non-viable within the marketplace.

Second, many 'free' (typically aliphatic or neutral) stimulatory AAs are either poorly or slightly soluble in water. Thus, a resultant consequence for such AAs is that they will also exhibit relatively slow dissolution rates, in comparison to AA salts, when introduced into an aqueous environment. This low flux rate of stimulatory AAs would, minimally, greatly extend the time required for these compounds to reach the required ambient threshold concentration necessary to initiate an enhanced feeding response from the fish. For highly insoluble stimulatory AAs, it should, then, be expected that the required flux of these compounds into the fishes' environment would likely never exceed that required for stimulation of the fish, thereby rendering such AAs ineffective with respect to their intended mode of operation.

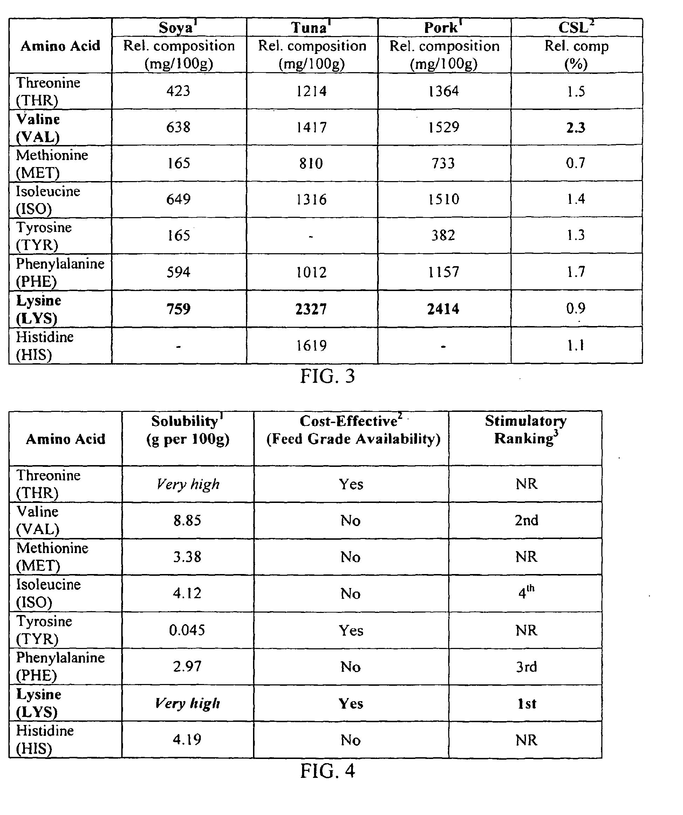

Finally, it has been shown that certain fish species, even subspecies (e.g. Common and Grass carp), exhibit dissimilar 'taste' preferences towards specific AAs ('Taste Preferences in Fish', Kasuman et.al.). Thus, a widely adopted philosophy within trade circles has been that no single AA is able to stimulate an enhanced feeding response over a broad cross-section of fish species. Thus, essentially all commercially available AA based aquaculture feed and fishing bait enhancers/ attractants (such as Aquatrac® and Aminosabe, respectively) currently feature a wide spectrum of AAs, typically derived through the digestion and/or fermentation of various plant or animal products. Such AA mixtures are, in turn, designed to 'cover the bases' with regard to the end user's specific application. However, a reinterpretation of the available literature strongly suggests that the stimulatory effect of such AA mixtures is, in actuality, due to the fact that only one stimulatory AA (or a number of 'non-interfering' AAs of the same stimulatory class), present in excess of all other AA(s), is responsible for the mixture's stimulatory effects. This hypothesis is supported by the literature, as it has been established that AAs belonging to different stimulatory classes interfere with one another during adsorption at competing cell membrane receptor sites, which are, in turn, linked to the fish's sensory neurons. Thus, since most AAs found within natural food derived mixtures are present in comparable amounts (see FIG. 3), it then stands to reason that the stimulatory effects associated with such mixtures are only likely due to the activity of any one stimulatory AA (or combinations of AAs belonging to the same stimulatory class) present in excess. This hypothesis is further reinforced through an examination of the AA profiles of numerous common natural food sources (see FIG. 3), where it quickly becomes apparent that the most effective stimulatory AAs, such as L-Lysine and L-Valine, are also most often present in greater amounts than any other stimulatory AAs within such mixtures.

In summary, these findings lead to one significant conclusion: only single stimulatory AAs, (or combinations of AAs belonging to the same stimulatory class) found in excess of all other stimulatory AAs within mixtures of such compounds, are now determined to be solely responsible for the stimulatory effects of naturally derived AA mixtures. Thus, any effective fish feeding stimulant should be designed to introduce a dominant or single stimulatory AA (or multiple stimulatory AAs belonging to one of four general classes, as described herein) into the fishes' environment, which, via the predetermined flux rate, should then attain or exceed, and then maintain for a predetermined period, the threshold concentration necessary to induce an involuntary feeding response within the fish. This key finding is in stark contrast to the philosophy, and associated composition, of commercial products, such as Aquatrac® and Aminosabe. Each of these products contains - 17 separate AAs in comparable amounts, and so merely achieve the limited goal of stimulating a diminished feeding response from a variety of popular species.

Disclosed herein is an AA based feeding stimulant which simultaneously satisfies the criteria of:
- Being 'manufacturing friendly', i.e. not being prohibitively expensive with regard to the acquisition of raw materials (AAs), as well as not undergo spoilage during processing or storage.
- Being highly soluble in water, i.e. being able to rapidly achieve the threshold conc. of stimulatory AAs, via dissolution and dispersion within an aqueous environment, needed to initiate an enhanced feeding response from fish within said environment.
- Being a single stimulatory AA that initiates an involuntary, or greatly enhanced, feeding response from a wide variety of commercial and sporting species when introduced to said species aqueous environment.

It has been shown though aquaria studies; as well as a series of extensive field trials that porous, permeable or soluble media soaked in a solution of LYS HCl stimulate an involuntary feeding response among a wide variety of fish species when said LYS HCl, initially contained within the media, is introduced into the fishes' environment. Field and/or aquaria studies have shown that LYS HCl solutions stimulate a feeding response from species including, but not limited to, Barbel, Bass, (Small and Largemouth), Bream, Bullhead catfish, Buffalo, F1 Hybrids, Freshwater Drum, Channel catfish, Carp (all strains, including Koi), Roach (shiner), Sunfish and Tench.

The threshold concentration of LYS HCl, contained within a standardized 15 mL sample of host media, required for stimulation was found to be ~0.01% (w/w). No upper limit of concentration for stimulation was found, although standard sized, absorbent media soaked in LYS HCl solutions of greater than ~10% (w/w) caused the fish to become over stimulated to such an extent that takes (when angling) became so rapid and frequent that the anglers became increasingly unable to react quickly enough to set the hook. This range of 'static' LYS HCl concentrations present within said media (determined using aquaria of known dimensions), is correlated with an average flux rate of at least ~1 - 2+ mg/min, over a 15 min. period, for samples tested in the field; which are, in turn, subject to the 'dynamic' effects of natural water currents and/or flow.

It has been shown through both tank and field tests that porous inorganic media, such as dried clay, soaked in LYS HCl solutions of greater than 5%+ (w/w), then permitted to dry, make for an effective embodiment that not only stimulates fish to feed, but may also be stored for long periods of time without spoiling. Conversely, fish feed pellets, sweet corn, chum (a mixture of bread, cake and/or other similar crumb) and other food stuffs soaked directly in 0.1 - 2+% (w/w) LYS HCl solutions proved to be better stimulants than the LYS HCl soaked inorganic media, but, due to the fact that LYS HCl is present in the aqueous phase, such 'wet' food based embodiments were found to have a limited effective lifetime before the effects of spoilage became evident. Spoilage can be prevented to a certain degree through either refrigeration and/or incorporating a food preservative into the finished product, although, in terms of shelf life considerations only, a dried final product is preferable.

The enhanced relative effectiveness of LYS HCl soaked feedstuffs, with respect to LYS HCl impregnated inorganic porous media (such as clay), is attributed to the fact that food items also provide the fish with additional gustatory (taste) and olfactory (smell) stimuli which are, in turn, associated with the inherent flavor of such food items. Indeed, all subsequent field trials and aquaria studies have shown that LYS HCl soaked into food based media significantly outperformed any type of similarly prepared inorganic media.

Thus, a dried, food based porous media product, within which LYS HCl can be encapsulated, will not only provide a solution with regard to long term storage, but also furnish a preferred embodiment of the product possessing supplementary gustatory and olfactory attraction. These goals have been accomplished though tumbling large quantities (25 kg) of commercial fish feed pellets in small amounts (300 - 1200 mL) of a saturated LYS HCl solution. Upon drying, the pellets become impregnated with microscopic LYS HCl solid particles to the depth consistent with that achieved by the LYS HCl saturated solution during the initial tumbling phase of preparation. When used, i.e. exposed to the fish in their natural environment (after first soaking in water), the treated pellets quickly become saturated with a LYS HCl solution of 0.1 - 2+% (w/w) concentration, which, in turn, is concomitant with the necessary -1 - 2+ mg/min flux rate of LYS HCl required to induce an enhanced feeding stimulus from fish within their natural ('dynamic') environment. Thus, fish feed pellets, prepared in the manor detailed here, ably meet the requirements outlined below. Specifically:

Manufacturing Friendly: LYS HCl is a relatively cheap (feed grade available), thermally stable compound. The fact that LYS HCl is typically supplied in the form of a HCl salt translates to it having an increased shelf life with respect to most other 'free' stimulatory AAs, which, in turn, may typically not be converted to a more stable HCl (or other salt) form.

Solubility: As with most AA salts, LYS HCl is extremely soluble in water (64g per 100g H₂O). This property satisfies several other desirable characteristics. First, when surface coating (tumbling) feed pellets or other porous dried foodstuffs, the saturated AA solution employed must not possess too great a volume, as this would ultimately result in either an overly dampened final product (with an inherently shorter shelf life) or a product which must then be dried for an extended period of time prior to storage. Second, the extremely high solubility of LYS HCl is directly responsible for its concomitantly high dissolution rate. Any AA stimulant, initially in the solid phase, must also possess a high dissolution rate, as this provides for initially establishing the necessary threshold concentration of stimulant within the media, as well as ultimately giving rise to the optimum flux rate of LYS HCl away from said carrier media when introduced into an aqueous environment.

Stimulatory Activity: Field and aquaria studies have shown that LYS HCl effectively stimulates and enhanced feeding response from a variety of fish species, including, but not limited to, Barbel, Bass, (Small and Largemouth), Bream, Bullhead catfish, Buffalo, F1 Hybrids, Freshwater Drum, Channel catfish, Carp (all strains, including Koi), Roach (shiner), Sunfish and Tench. Thus, while LYS HCl treated products have proven to be effective stimulants with this wide cross-section species, it also seems likely that LYS HCl will also induce a similar response among a variety of commercial species that have yet to be investigated, including, but not limited to Cod, Eel, Flat fishes, Grouper, Halibut, Salmon, Sea Bass, Snapper, Stripped Bass, Tilapia, Trout and Walleye.

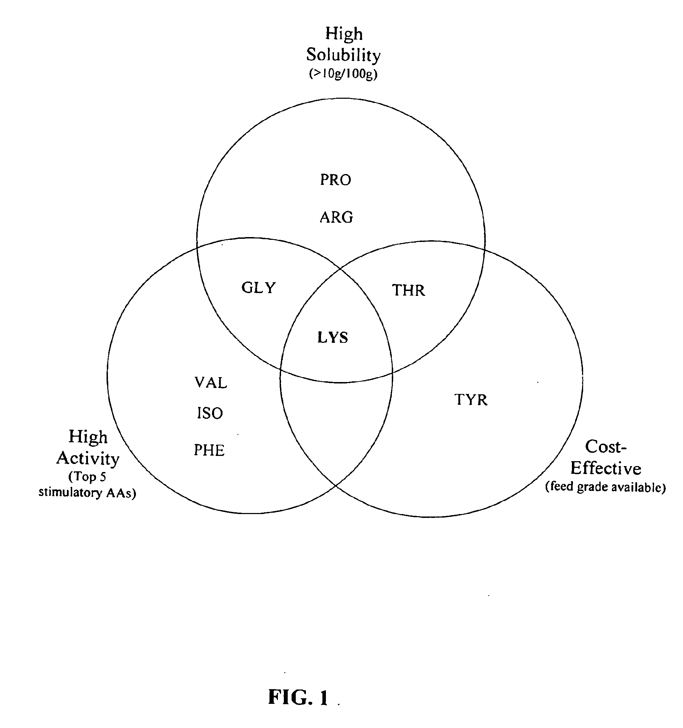

In addition to LYS HCl, a range of other single AAs, AA salts and AA derivatives (Betaine HCl, L-Valine, L-Phenylanine, L-Histidine HCl, L-Isoleucine, L-Leucine, L-Glycine, L-Proline and L-Alanine) were also investigated, but were not selected for further field trials as they did not perform well with regard to one or more of the three criteria demanded of the final product, namely: promoting an enhanced stimulatory effect; possessing good solubility; and/or not being prohibitively expensive. However, for certain applications, particularly within the angling industry, criteria not related to stimulatory activity become less of a concern. Thus, for such applications (see FIG. 4 and FIG. 1), L-Valine, L-Phenylanine, L-Glycine and L-Isoleucine, which were all found to induce either an 'excellent' or 'very good'⁴ feeding response in fish, will also make effective fish feeding stimulants.

Further disclosed herein is that single stimulatory L-lysine HCl, when introduced into an aquatic environment, at a level that rapidly equals or surpasses the threshold concentration required to stimulate an involuntary feeding response from fish, will elicit a strong feeding response from fish within said environment. Further, the invention is to minimize manufacturing costs of any final product though the utilization of raw materials that are both thermally stable and not prohibitively expensive. Such materials typically comprise feed grade, LYS HCl (see FIG. 1 and FIG. 4).

### - Porous, Permeable and Soluble Food Based Media

Commercial feed pellets, as well as a host of common fishing baits, comprise examples of food based porous, permeable, or soluble media products, within which stimulatory AAs can be impregnated. Impregnation is accomplished in either of two ways: first, by incorporating a stimulatory AA powder or solution directly into the product's base ingredients prior to manufacture (encapsulation); or, secondly, by tumbling these feedstuffs with small amounts of a concentrated stimulatory AA solution (surface treatment). In each case, the final product should ideally be dried in order to prevent any subsequent spoilage. These two manufacturing methodologies produce final products with somewhat dissimilar stimulatory AA distributions. Adding stimulatory AAs directly to the product's base ingredients prior to manufacture furnishes a completed item within which the stimulatory AAs are uniformly distributed via encapsulation; while tumbling these feedstuffs with small amounts of a concentrated stimulatory AA solution ultimately produces a surface coating of dried stimulatory AAs. For each form of manufacture, the stimulatory AA loading selected must ultimately give rise to final products possessing an intrinsic stimulatory AA solution strength equivalent to, or surpassing, that known to induce an enhanced feeding stimulus within fish. For LYS HCl this optimal concentration in one example is at least 0.1 - 2% (w/w), with such loadings necessarily giving rise to the predetermined concomitant LYS HCl flux rate under conditions typically encountered in the field. In one example, the predetermined flux rate is at least 1-2 mg/min. In another example, the predetermined flux rate is between 1-10 mg/min.

A beneficial side effect of there being both internal- (encapsulated) and surface-manufacturing options by which stimulatory AAs may be introduced to such host media is that these respective products will, ultimately, maintain the predetermined flux rate of stimulatory AAs over dissimilar time periods. For the surface coated embodiments, a 'burst' of stimulatory AAs, upon addition to an aqueous environment, will occur (typically, in practice, over ~15 minutes for a standard sized sample); while for the uniformly distributed 'encapsulated' embodiments, a prolonged 'leaking' of stimulatory AAs would ensue upon usage. These respective traits are advantages with regard to the end users specific requirements. For example, aquacultural (fish farming) applications would likely favor a 'burst' type pellet product, ensuring the fish gorge themselves on the available feed as soon as possible after its introduction; while anglers may prefer a 'leak' style dough or other bait type product, from which stimulatory AAs are introduced into the fishing area over a longer time period. Finally, it is also possible to combine both internal- and surface- manufacturing methods in order to create a finished product that possesses both 'burst' and 'leak' characteristics. For example, a host media with at least first and second predetermined flux rates for one or more amino acids.

### - Porous, Permeable and Soluble Inorganic Media

Clays, zeolites, polymer matrices, PVA, gels, and foam sponges comprise examples of inorganic porous, permeable or soluble media, within which stimulatory AAs can be impregnated. Impregnation is accomplished in either of several ways: first, by incorporating a stimulatory AA powder or solution directly into the product during manufacture; or by applying a coating of the concentrated stimulatory AA to the surface of the media, either in the form of a solid powder or a solution. In each case, the final product should ideally be dried in order to prevent any subsequent degradation.

As with food based media, these manufacturing methodologies produce final products with somewhat dissimilar stimulatory AA distributions. Encapsulating stimulatory AAs within the media during to manufacture will furnish a completed product within which the stimulatory AAs are uniformly distributed; while applying a coating of concentrated AAs to the surface of the media ultimately produces a coating of the stimulant. For each mode of manufacture, the stimulatory AA loading selected must ultimately give rise to final products possessing an intrinsic stimulatory AA solution strength equivalent to, or surpassing, that known to induce an enhanced feeding stimulus within fish. For LYS HCl this optimal concentration has been shown to be 0.1 - 2+% (w/w); with such loadings necessarily giving rise to the predetermined LYS HCl flux rate of -1 - 2+ mg/ min under conditions typically encountered in the field.

A beneficial side effect of there being both encapsulated and surface treatment options available during manufacture is that the stimulatory AAs within each respective embodiment will, ultimately, generate the desired ambient concentration of stimulatory AAs at dissimilar rates. For the surface coated embodiment, a 'burst' of stimulatory AAs, upon addition to an aqueous environment, would occur; while for the encapsulated embodiment, a 'leaking' of stimulatory AAs over a longer time frame upon usage would result. These respective traits are advantages with regard to the end users specific requirements. For example, aquacultural (fish farming) applications would likely favor a 'burst' type product that could, perhaps, be lowered into fish pools immediately prior to the introduction of feed, so ensuring the fish subsequently gorge themselves on the available feed; while anglers employing plastic lures or jigs, as well as commercial fishermen employing fish traps or trot lines, would prefer a 'leak' style embodiment from which stimulatory AAs are introduced into the fishing grounds over an extended period of time. Finally, it is also possible to combine both encapsulated and surface manufacturing methods in order to create a finished product that possesses both 'burst' and 'leak' characteristics.

### -Direct End User Applications

Coatings of stimulatory AAs may be applied directly to any media via a variety of methods, including, but not limited to dusting and the use of gels, sprays, glugs, dips, slurries and soaks. In each case, the product applied to the host media is selected to give rise to the predetermined flux rate of stimulatory AA(s), in the vicinity of the media equivalent or in excess of that known to induce an enhanced feeding stimulus within fish ( ∼1 - 2+ mg/ min LYS HCl under conditions typically encountered in the field).

Examples of specific user end applications are typically centered on the angling industry, where a large variety a commercial direct application products (such as Aminosabe etc.) are common in the market place. However, unlike these current commercial products, which typically feature a broad range of AAs derived through the fermentation or digestion of various plant or animal products (thus, they essentially comprise more concentrated analogues of AA distributions found within natural food sources), the primary embodiment of this invention features only a single variety stimulatory AA, preferentially LYS HCl. However, in terms of usage, this disclosure and current products share similar modes of employ, i.e. via spraying or applying a gel, solution or suspension of the stimulatory AA directly to the to the desired item (typically a form of lure or bait); or by dusting, dipping, soaking or 'glugging' the desired item in a sample of the stimulatory AA.

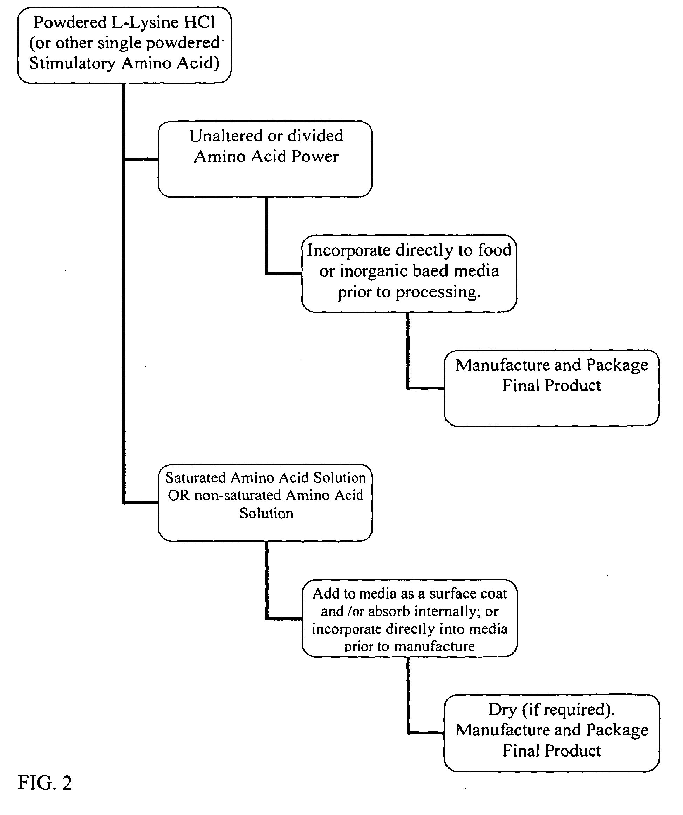

The disclosure utilizes highly stimulatory, highly soluble, thermally stable and cost-effective AA(s) or AA salts, preferentially, but not limited to, LYS HCl, as fish feeding stimulants. Such compounds are incorporated within or applied to the surface of various host media, so that when immersed in water these embodiments give rise to the predetermined flux rate of stimulatory AAs, within said aquatic environment, that, in turn, surpass a threshold level require to initiate an enhanced feeding response among fish. For LYS HCl this is 1 - 2+ mg/min. Likely manufacturing schemes are illustrated in FIG. 2.

### Scientific Background

The tissues of every plant and animal contain amino acids (AAs); with the tissues of each particular life form possessing a unique AA profile. Examples of specific AA profiles are shown in FIG. 3.

It has long been known that fish are both attracted to, and stimulated to feed by, AAs emanating from food sources within their environment. Thus, commercial fish food supplements (e.g. Aquatrac®), as well as fishing bait additives (e.g. Aminosabe), incorporate concentrated mixtures of AAs into their products, often analogous to the AA profiles of natural feed stuffs. Thus, these commercial products subsequently generate a greater than normal concentration of solvated AAs in and around the feedstuff to which they are added. This, in turn leads, to an enhanced feeding response from the fish when introduced into their environment. The basis of this invention is based on a basic reinterpretation of this long held assertion.

Simply, we have identified that a great excess of any solvated single stimulatory AA, with respect to all others within any feedstuff's AA profile, is solely responsible for generating an involuntary feeding response for a broad cross-section of fish species. This key assertion is based on the following: First, it is known that stimulatory AAs belong to one of four general classes (Acidic (A), Basic (B), Short Chain Neutral (SCN) and Long Chain Neutral (LCN)); as determined through the mode of interaction of each respective class of such AAs side chains with one of four dedicated receptor sites at the fishes' sensory organs ^{1,2}. All foodstuffs inherent AA profiles are, in turn, comprised of single AAs from each of these four categories. Second, and most significantly, it has been shown that stimulatory AAs of different classes, such as SCN (e.g. VAL) and B (e.g. LYS), although known to be highly stimulatory when used in isolation, return a negligible stimulatory affect, when incorporated at comparable levels, into a simple mixture of these solvated AAs. This key finding implies that, for any AA profile, only the single stimulatory AA in excess of all others is responsible for the observed overall stimulatory effect of the solvated AA mixture to which it belongs; as all other AAs (not in excess) within said mixture will have their respective stimulatory effects 'cancelled' by other classes of interfering AAs binding to their own specific receptor sites.

It is further hypothesized that fish have evolved to become stimulated to feed by the slight excess of any single stimulatory AA (or collection of AAs belonging to the same stimulatory class), within an AA profile, emanating from natural food sources. As illustrated by FIG. 3, this is often, but not always limited to, LYS (animal based products) or VAL (plant based products). Thus, we arrive at the basic scientific foundation of the invention: by adding LYS (or any other soluble stimulatory AA) in significant excess to any foodstuff or other media (such as artificial baits, lures and other embodiments, as discussed in detail below), the AA profile of said foodstuff or media will be dramatically skewed in favor of the AA added. Thus, when introduced to the fishes environment, the AA treated foodstuff will ultimately exude the desired single stimulatory AA in great excess of all others present within the foodstuffs - a condition that has been shown to invoke a vigorous, involuntary feeding response from a great variety of fish species.

### AA Selection

While any single stimulatory AA, including but not limited to VAL, ISO, PHE, LYS, and GLY, may be added to any foodstuff or media in order to create the relatively large excess of said AA, necessary to invoke an enhanced feeding response (as detailed above), the choice of AA employed is also affected by other important variables, such as purchase cost (which must be kept low) and solubility (which must be kept high, in order to promote a rapid rate of dissolution from the food stuff or media when introduced to an aqueous environment). As illustrated by FIG. 1, Lysine HCl is the only AA that simultaneously possesses each of these necessary properties, thus rendering it the best choice for inclusion within any commercially viable embodiment(s) of the invention. LYS HCl has a very high solubility (64g/100 g H₂O), and is available as a feed grade (~$1.50/kg).

### Preparation of LYS HCl

LYS HCl was purchased directly in bulk from an animal feed supplier (Dekalb Feeds Inc., Rock Falls, IL). The feed grade product is ~98.5% pure, and is supplied as a coarse ground powder. This solid may be incorporated directly into specific embodiments of the invention (as detailed below), or mixed with other soluble 'fillers', such as salt (NaCl), calcium chloride, potassium chloride and/or monosodium glutamate (MSG). The incorporation of MSG (a known flavor enhancer) is advantageous as it also increases the palatability of any foodstuff based embodiment. While MSG is also an AA salt, its inclusion does not diminish the stimulatory effects of LYS HCl, as type A (MSG) and B (LYS) AAs are known to be non-interfering². This assertion was also confirmed via a series of field trials. The powdered LYS HCl, or mixtures of LYS HCl containing any/all of the soluble 'filler' ingredients listed above, may be dissolved in water to make highly concentrated solutions. These solutions may then be incorporated directly into embodiments of the invention (as detailed below). Typical 'recipes' for each type of solution may include:

| Concentrated LYS HCl solution | Concentrated LYS HCl mixture solution |
|---|---|
| 50 g LYS HCl powder | 50 g LYS HCl powder |
| 100 mL D.I. water | 10 g MSG |
| | 10 g NaCl |
| | 100 mL D.I. water |

In each case above, the powdered solid ingredients are slowly added and stirred with hot (∼70 °C) D.I. water until fully dissolved, with the final solutions being sealed, cooled and stored under refrigeration. The main cause of spoilage for AA based solutions is bacterial degradation, so by using a hot D.I. water solvent the product is pasteurized in situ - a condition which ultimately extends the shelf life of such solutions to between 3- 5 years (est.). Also, by only including highly soluble inorganic fillers (as opposed to organic food based fillers like starch or sugar) bacterial based degradation and/or side reactions with such additives are kept to a minimum. Finally, the shelf life of such solutions can be extended even further through the inclusion of anti-bacterial preservatives, such as sodium benzoate /benzoic acid or potassium sorbate / sorbic acid; although such additives are more appropriate for specific food based embodiments, as detailed below. In one example, anti-bacterial preservatives are added to the powdered LYS HCl mixture.

### Manufacturing and Application Details for Specific Embodiments of the Invention

The LYS HCl based powders and/or solutions detailed in the previous section may be incorporated into a wide variety of embodiments. While initially referred to only in a generic sense as Porous, Permeable and Soluble Food Based Media; Permeable and Soluble Inorganic Media; and Direct End User Embodiments, this section provides specific details with regard to the manufacture, as well as mode of action and employment of a selection of a preferred embodiments that have, in turn, been investigated in detail.

### -Dried commercial fish feed pellets and baits

Dried fish feed pellets are the most common form of commercial fish feed employed within the aquaculture / fish farming industries, while they are also commonly used as fish bait worldwide. When treated with LYS HCl (as fully detailed below), such foodstuffs are eaten more frequently, in greater amounts, and with increased vigor by fish - an effect that has obvious benefits for both the commercial fish farmer and/or angler.

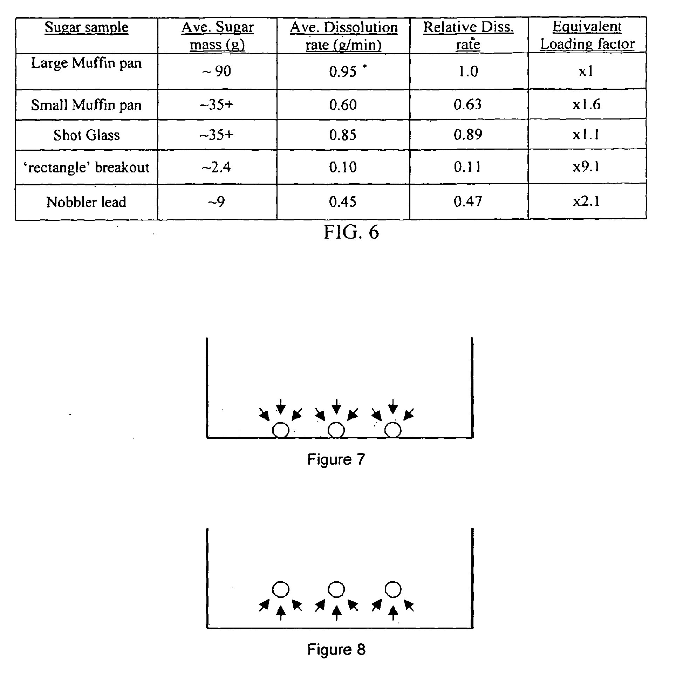

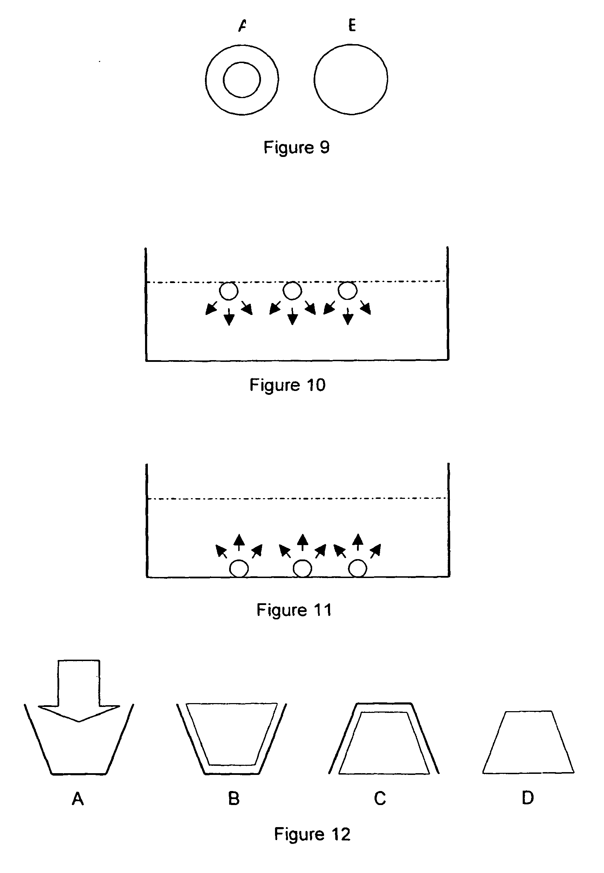

We have found that soaking a ~15 mL sample of dried feed pellets in a 0.1 - 10+ % w/w solution of LYS HCl impregnates the foodstuff (FIGS. 7 and 8) with a sufficient level of LYS HCl (aq) necessary to induce an involuntary feeding response from fish, via leaching and diffusion of LYS HCl (aq) from the foodstuff (with a corresponding flux rate of -1-2+ mg/min), when introduced into the fishes' environment (FIGS. 10 and 11). The 0.1 - 10+ % w/w LYS HCl solution required is initially prepared through the dissolution or dilution of the respective solid(s) or liquid solutions(s), previously detailed in the 'Preparation of LYS HCl' section. The soaked pellets are prepared by adding them directly to a 0.1 - 10+ % w/w solution of LYS HCl. They may be either soaked directly for ~ 2 - 6 hrs or 'pumped' under vacuum, a process which shortens the absorption time to -10 minutes, in order to become completely saturated with the LYS HCl solution.

In terms of specific modes of application, when used as a fish bait and/or chum, walnut (~15 mL) sized 'nuggets' of small (feed) pellets are typically introduced to the fishing area every 5-15 minutes in order to attract, stimulate and feed the fish; while a larger soaked pellet(s) is most often used as hook bait. A 1.0 % w/w LYS HCl soak was found to work best under cool water conditions (winter, early spring, late fall), with a 0.5% w/w strength soaking solution proving best under warmer water conditions (summer, late spring, early fall). This corresponds to a flux of LYS HCl (aq), emanating from the foodstuffs, of 1-2+ mg/min. The difference in % w/w concentration between the two soak solutions is a consequence of the fact that fish eat relatively less food under cool water conditions. As a result, a smaller volume of pellets fed less frequently (under cool water conditions) need to be soaked in a ~x2 concentrated solution of LYS HCl in order to give rise to an equivalent ambient concentration of LYS HCl, within the fishing area, when compared to the greater volume of pellets, possessing a relatively lower concentration of LYS HCl, used under warm water conditions.

In terms of aquaculture / fish farming applications, the angling based methodology detailed above can be employed directly with similar results. However, since fish farms generally use pellets directly from the bag, such a soaking procedure is rendered somewhat impractical. Thus, a preferred embodiment for use within the aquaculture industry features the direct use of dry, surface coated LYS HCl pellets. Simply, commercial feed pellets are tumbled with a highly concentrated solution of LYS HCl (aq) (as outlined in the 'Preparation of LYS HCl' section - typically 250 - 750 mL per 25 kg dry pellet), before being dried prior to storage. FIG. 9a provides a cross section view of the finished product. When soaked, i.e. introduced as feed to a fish rearing pond, the pellets' dry LYS HCl coating will quickly dissolve, ultimately giving rise to the necessary 0.1 - 10+ % w/w conc. of LYS HCl (aq), within the surface layers of the pellets, necessary to invoke, via leaching and diffusion (with a flux rate of ~1-2+ mg/min), an enhanced feeding response among the fish.

An alternative embodiment featuring dried fish feed pellets is illustrated in FIG. 9b. Simply, powdered LYS HCl, or a powdered mixture containing LYS HCl (as detailed in the 'Preparation of LYS HCl' section), is added to the base ingredients of feed pellets prior to their manufacture, with the final dried pellets possessing a uniform distribution of LYS HCl. The amount of LYS HCl added (typically 5 -60 g per kg pellets) is consistent with the amount of this ingredient necessary to give rise to a level of LYS HCl (aq), within the feedstuff upon soaking, necessary to invoke an enhanced feeding response among the fish. As with all other pellet embodiments, this value, as generated within such feedstuffs, is established to be 0.1 - 10+% (w/w) for LYS HCl (aq). This corresponds to a flux of LYS HCl (aq), emanating from the foodstuffs, of ~1-2+ mg/min.

### -Groundbait (chum)

Commercial groundbaits comprise a mixture of dried base ingredients, typically in a crumb and/or powdered form. Common groundbait ingredients include, but are not limited to, bread crumbs, cookie crumbs, cake crumbs, various animal and fish meals, ground seeds and/or ground feed pellets. Groundbait is used both as an attractant and feed by anglers, and is simply prepared by mixing the dried groundbait with a liquid (often lake or river water) until a loose dough-like texture is obtained. Such finished groundbaits are introduced to the fishing area by the angler via hand, catapult, swimfeeder, spod or bait boat in order to create a bed of feed that, in turn, attracts and holds the fish within the fishing area.

Powdered LYS HCl, or a powdered mixture containing LYS HCl (as detailed in the 'Preparation of LYS HCl' section), is added to the base ingredient(s) of one or more of the groundbait's components prior to their respective manufacture. The amount of LYS HCl added (typically 5 -60 g total per kg of dry groundbait) is consistent with the amount of this ingredient necessary to give rise to a level of LYS HCl (aq), within the feedstuff upon soaking, necessary to invoke an enhanced feeding response among the fish, As with previous pellet embodiments, this value is established to be 0.1 - 10+% (w/w) for LYS HCl (aq) generated within such feedstuffs. This corresponds to a flux of LYS HCl (aq), emanating from the foodstuffs, of ~1-2+ mg/min. One of the most effective groundbaits is also one of the most straightforward - crushed LYS HCl treated feed pellets, simply prepared by coarsely grinding or crushing feed pellets of the type discussed above and illustrated in FIG. 9b.

### -Paste and dough (stink) baits

In common with commercial groundbaits, the base ingredients of paste and dough (stink) baits also typically comprises a mixture of edible crumb and/or powders. Common paste and dough ingredients similarly include, but are not limited to, bread crumb, cookie crumbs, cake crumbs, various animal and fish meals, ground seeds and/or ground feed pellets. However, unlike groundbait, paste and dough baits are typically mixed to a final 'tacky' consistency, with water and/or edible oils, prior to sale. Such finished products are, typically, only employed as hook baits by the angler. Powdered LYS HCl, a powdered mixture containing LYS HCl, a concentrated solution of LYS HCl, or a liquid mixture containing concentrated LYS HCl (as detailed in the 'Preparation of LYS HCl' section), is added to the bait's base ingredients prior to manufacture. The amount of LYS HCl added (typically 5 -60 g per kg of dry ingredients) is consistent with the amount of this ingredient necessary to give rise to a level of LYS HCl (aq), within the finished product, required to invoke an enhanced feeding response among the fish. As with previous pellet embodiments, this value is established to be 0.1 - 10+% (w/w) for LYS HCl (aq) generated within such feedstuffs. This corresponds to a flux of LYS HCl (aq), emanating from the foodstuffs, of ~1-2+ mg/min. In common with such 'wet' final products, the LYS within the bait will undergo bacterial degradation over time. This process can be curtailed through either pasteurization of the final sealed product or the use of antibacterial preservatives, such as sodium benzoate /benzoic acid or potassium sorbate / sorbic acid. If preservatives are to be used, they should be added to the base ingredients of the bait at a level of 0.05% - 0.10 % w/w prior to manufacture.

### -Encapsulated Sugar (hard candy) Attractants / Stimulants

Powdered LYS HCl is added to the base ingredients, prior to manufacture, of hard candy. When introduced into an angler's fishing area, the product will dissolve over a predetermined time period, releasing LYS HCl (aq) and, thereby, stimulating any fish within its vicinity to feed. The amount of LYS HCl utilized is consistent with the amount of this ingredient necessary to give rise to a level of LYS HCl (aq), within an aqueous environment upon dissolution of the sugar matrix, required to stimulate a feeding response in fish. This corresponds to a flux of LYS HCl (aq), emanating from the products, of ~1-2+ mg/min. Oil based flavors may also be added to the sugar matrix during manufacture, in order to provide such embodiments with supplementary olfactory attraction. Specifically, such products have been manufactured via a batch process (making - 19 oz of finished product) according to the following protocol: Heat the hard candy base ingredients (2 cups sugar, 2/3 cup light corn syrup, 2/3 cup water) slowly to 149°C (300°F). Let this mixture cool to 127°C (260°F) before adding LYS HCl powder (40 ± 20 g/ pound of base ingredients) and (optional) flavoring oil (0.5 - 5.0 mL /pound of base ingredients). Stir well. Pour immediately into molds coated in cooking spray (FIG. 12A) and let cool for at least one hour or until hard (FIG. 12B) before removing from molds (FIGS. 12C, D). Fishing weights may also be simply dipped in the molten sugar mix before being allowed to cool in order to prepare a hard candy coated fishing lead/ sinker. This manufacturing protocol can be scaled up proportionally in order to generate larger amounts of finished product.

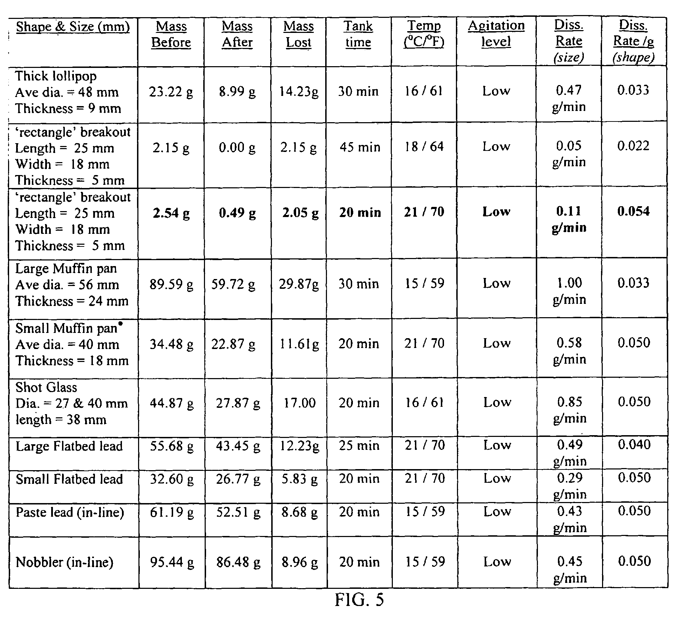

Various molds and fishing weights, which possess different sizes and shapes, give rise to final products that dissolve at different rates under various ambient conditions of temperature and agitation, as shown by FIGS. 5 and 6 (19 oz recipe mix with 1 teaspoon (6.0g) LYS HCl encapsulated used during testing). While a great number of samples were tested, it was shown that a 'large muffin pan shape' yielded a final product that provided the most sustained and controllable dose of LYS HCl over a the longest period of time (45 min - 80 min) when submerged in water, rendering it the most viable candidate for further testing. Subsequent field tests using both aniseed oil (2 mL per mix) and geranium oil (4 mL per 19 oz mix) flavored 'large muffin pan' products (40 g LYS HCl powder per 19 oz mix) were conducted. In each case fish were attracted to such embodiments, with good numbers of a variety of species being captured by anglers simply casting their bait in close vicinity to the respective sugar blocks.

While of clear interest to the angling industry, such embodiments may also be utilized within the fish farming / aquaculture sectors. Specifically, similar products may be introduced to fish rearing ponds (e.g. via direct attachment to a rope, or constrained within a net attached to a rope) prior to or during the fishes' feeding cycle, then being removed at the completion of feeding before being dried and stored in preparation for their next use.

### -Compressed solids ('Pills' and 'Tablets') Attractants / Stimulants

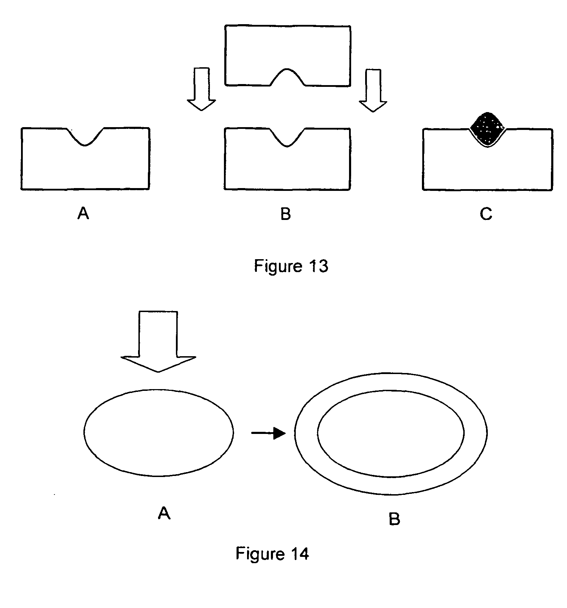

LYS HCl is added to powdered food and/or pharmaceutical industry 'filler' ingredients (e.g. cellulose, starch, sugars, calcium chloride) prior to compression into a solid 'pill' or 'tablet' form. The amount of LYS HCl added is consistent with the amount of this ingredient necessary to give rise to a level of LYS HCl (aq), upon dissolution of the compressed solid, required to stimulate a feeding response in fish. This corresponds to a flux of LYS HCl (aq), emanating from the product, of ~1-2+ mg/min. The method of manufacture of such embodiments is illustrated by FIG. 13. As with the analogous Encapsulated Sugar (hard candy) Attractants / Stimulants embodiments discussed immediately above, these embodiments would also be suited to use as a fish attractants / feeding stimulants within the angling and fish farming / aquaculture fields.

### Supplementary Manufacturing and Application Details for General Embodiments of the Invention

-Other Porous, Permeable and Soluble Food Based Media

| Embodiment | Details |
|---|---|
| Seed and Grain Baits and Chum | LYS HCl is added to seeds and grains including, but not limited to, sweet corn, maize, tiger nuts, peanuts, raisins, wheat barley, hemp, tares, and various beans; prior to, during, or after preparation for their respective use as bait and/or chum (FIG. 7). The amount of LYS HCl absorbed is consistent with the amount of this ingredient necessary to give rise to a level of LYS HCl (aq) within the feedstuff (FIG. 9a and 9b), typically 0.1 - 10+% (w/w), required to stimulate a feeding response in fish when introduced into their environment (FIG. 11). This corresponds to a flux of LYS HCl (aq), emanating from a sample of foodstuff, equivalent to -1-2+ mg/min. |
| | It has been found that adding 5 ± 2 g of LYS HCl powder directly to a 14 oz can of sweet corn, stirring, cooling via refrigeration and then leaving to soak for ~6 hours generates a final product that, when introduced to the fishing area at a rate of 5 - 20 grains every 5-15 minutes invokes the desired stimulatory effects among any fish present. |
| Cured Fish Eggs and Other Preserved Natural Baits and Chum | LYS HCl is added to cured fish eggs or other preserved natural fishing baits, such as vacuum packed fish or shellfish and dehydrated wax worms or maggots; prior to, during, or after preservation (FIGS. 9a and 9b). The amount of LYS HCl added is consistent with the amount of this ingredient necessary to give rise to a level of LYS HCl (aq) within the bait required to stimulate a feeding response in fish upon said baits introduction to the fishes' environment. This corresponds to a flux of LYS HCl (aq), emanating from the foodstuffs, of ~1-2+ mg/min. |
| Syrup, Gel and Emulsion Baits, Attractants / Stimulants | LYS HCl is added to the base ingredients, prior to manufacture, of viscous liquids or non-rigid solids; typically comprising syrups, gels or emulsions. The amount of LYS HCl added is consistent with the amount of this ingredient necessary to give rise to a level of LYS HCl (aq) within each feedstuff required to stimulate a feeding response in fish (FIGS. 10-11) through establishing a flux rate of LYS HCl, into the fishes' environment of ~1-2+ mg/min. |
| -Other Porous, Permeable and Soluble Inorganic Media | |

| Embodiment | Details |
|---|---|
| Clays, Zeolites and Other Porous Media (such as sponges or foams) Attractants / Stimulants | LYS HCl is added to the base ingredients, prior to manufacture, of porous / permeable clay, zeolite, sponge or foam; or a saturated or highly concentrated LYS HCl (aq) solution is absorbed directly into the dry porous / permeable clay, zeolite, sponge or foam (FIGS. 7-8). In each embodiment, the amount of LYS HCl added is consistent with the amount of this ingredient necessary to give rise to a level of LYS HCl (aq) within each media (FIG. 9a and 9b) required to stimulate a feeding response in fish when introduced into their environment (FIGS. 10-11). This corresponds to a flux of LYS HCl (aq), emanating from the products, of ~1-2+ mg/min. |
| | As with the analogous food based porous, permeable and/or soluble media based embodiments (Compressed solid Attractants / Stimulants and Encapsulated Sugar Attractants / Stimulants), discussed above, these products may similarly be employed as fish attractants / feeding stimulants within the angling and fish farming / aquaculture fields. |
| Polymers and Biodegradable Media Baits, Attractants / Stimulants | LYS HCl is added to the base ingredients, prior to manufacture, of porous, permeable, soluble polymer (e.g. plastic, synthetic or natural rubbers, PVA) or biodegradable based media; or a saturated or highly concentrated LYS HCl (aq) solution is absorbed into existing porous, permeable, soluble polymer or biodegradable based media. In each embodiment, the amount of LYS HCl added is consistent with the amount of this ingredient necessary to give rise to a level of LYS HCl (aq) within each media required to stimulate a feeding response in fish. This corresponds to a flux of LYS HCl (aq), emanating from the products, of ~1-2+ mg/min. Specific embodiments include, but are not limited to, inclusion within: perforated lures, plugs, spinners, jigs or other media (such as artificial plastic, rubber foam or sponge baits and/or substrates); permeable and/or porous lures, plugs, spinners, jigs or other media (such as artificial plastic, rubber foam or sponge baits and/or substrates); soluble or biodegradable lures, plugs, spinners, jigs or other media (such as artificial plastic, rubber foam or sponge baits and/or substrates); and encapsulation within soluble polyvinyl alcohol (PVA) substrates. |
| Gel and Emulsion Baits, Attractants / Stimulants | LYS HCl is added to the base ingredients, prior to manufacture, of viscous liquids or non-rigid solids; typically comprising gels or emulsions. The amount of LYS HCl added is consistent with the amount of this ingredient necessary to give rise to a level of LYS HCl (aq) within the media required to stimulate a feeding response in fish (FIGS. 10-11). This corresponds to a flux of LYS HCl (aq), emanating from the products, of ~1-2+ mg/min. |

### -Direct End User Applications

| Embodiment | Details |
|---|---|
| Dusting | Either powdered LYS HCl, or LYS HCl contained within a powdered mixture of solids (as detailed in the 'Preparation of LYS HCl' section) may be 'dusted' over or incorporated into anglers' baits (all kinds), lures jigs, spinners or other media (such as artificial plastic, rubber foam or sponge baits and/or substrates), as illustrated by FIG. 14. In each embodiment, the amount of LYS HCl applied is consistent with the amount of this ingredient necessary to give rise to a level of LYS HCl (aq), dissolving from the media, required to stimulate a feeding response in fish when introduced to their environment. This corresponds to a flux of LYS HCl (aq), emanating from the products, of ~1-2+ mg/min. |
| Sprays | Either suspended (colloidal) powdered LYS HCl; powdered LYS HCl; LYS HCl contained within a powdered mixture of solids; a concentrated solution of LYS HCl; or a solvated mixture containing a high concentration of LYS HCl (as detailed in the 'Preparation of LYS HCl' section) may applied to anglers baits (all kinds), lures jigs, spinners or other media (such as artificial plastic, rubber foam or sponge baits and/or substrates) via an aerosol or other spray, as illustrated by FIG. 14. For each embodiment, the amount of LYS HCl applied is consistent with the amount of this ingredient necessary to give rise to a level of LYS HCl (aq), dissolving from the media, required to stimulate a feeding response in fish when introduced to their environment. This corresponds to a flux of LYS HCl (aq), emanating from the products, of ~1-2+ mg/min. |
| Dips, Soaks, 'Glugs', Syrups, Gels and Emulsions | Either suspended (colloidal) powdered LYS HCl; a concentrated solution of LYS HCl; or a solvated mixture containing a high concentration of LYS HCl (as detailed in the 'Preparation of LYS HCl' section), may applied or incorporated into anglers baits (all kinds), lures jigs, spinners or other media (such as artificial plastic, rubber foam or sponge baits and/or substrates) in the form of a viscous (or non-viscous) liquid dip, soak, 'glug', syrup, gel or emulsion. Application methods include, but are not limited to, direct exposure to the desired media (via dipping, soaking or `glugging', as illustrated by FIG. 14) or direct injection. For each embodiment, the amount of LYS HCl applied is |
| | consistent with the amount of this ingredient necessary to give rise to a level of LYS HCl (aq), dissolving from the media, required to stimulate a feeding response in fish when introduced to their environment. This corresponds to a flux of LYS HCl (aq), emanating from the products, of ~1-2+ mg/min. |

Turning to FIG. 7, high density porous / permeable media (feed pellet, seeds & grains, preserved natural baits, clays & zeolites, polymers & biodegradable media, and assorted baits) absorb LYS HCl solution via soaking.

Turning to FIG. 8, low density porous / permeable media (expander pellet, seeds & grains, preserved natural baits, polymers & biodegradable media, and assorted baits) absorb LYS HCl solution via soaking.

Turning to FIG. 9, porous / permeable media (fish pellet, seeds & grains, preserved natural baits, clays & zeolites, polymers & biodegradable media, and assorted baits) absorb LYS HCl to a predetermined depth (A) or fully (B). In each case the absorbed LYS HCl (aq) typically has a concentration of 0.1 - 20+% w/w within the media.

Turning to FIG. 10, when introduced into an aquatic environment the low density soaked porous / permeable media will introduce LYS HCl (aq) to the surrounding area via leaching and diffusion. This process stimulates fish to feed.

Turning to FIG. 11, when introduced into an aquatic environment the high density soaked porous / permeable media will introduce LYS HCl (aq) to the surrounding area via leaching and diffusion. This process stimulates fish to feed.

Turning to FIG. 12, one example of encapsulated soluble media (hard candy) is shown. Molten sugar containing encapsulated LYS HCl is poured into a mold (A). The mixture is allowed to cool (B) before being freed from the mold (C). The finished product (D) dissolves slowly in water, releasing LYS HCl at a rate concomitant with that associated with porous / permeable media.

Turning to FIG. 13, one example of encapsulated soluble media (pills and tablets) is shown. A powdered mixture containing the desired media (e.g. sugar, starch, cellulose or calcium chloride) and LYS HCl is added to a mold (A). The mold is then stamped (under pressure) (B) before the finished product is freed from the mold (C). The finished product will dissolve slowly in water, releasing LYS HCl at a rate concomitant with that of porous /permeable media.

Turning to FIG. 14, examples of direct end user applications are shown. Solid or liquid mixtures, containing a high concentration of LYS HCl, may applied directly to anglers baits (all kinds), lures jigs, spinners or other media (such as artificial plastic, rubber foam or sponge baits and/or substrates) (A). Application methods include, but are not limited to, dusting, dipping, soaking, spraying or 'glugging'. The final treated media will disseminate LYS HCl at a rate concomitant with that of porous / permeable media (B).

### List of Commercial Manufacturing Protocols (M&M Vermiculture)

The 'Biosource Feeding Stimulant' in one example comprises a powdered mixture comprised of LYS HCl, MSG and NaCl combined in a 50:5:5 ratio, respectively. In another example, the biosource feeding stimulant comprises powdered LYS HCl.

### Manufacturing Protocol for 10 kg x 1mm /'micro' feed pellets -'WINTER DOSE' (basic 'practical' dosage = 12.5 g Biosource per 1 kg feed pellet)

1. Pre-grind 120g of the Biosource feeding stimulant into a fine powder, mix well.
2. Bring 0.205(+) L of water to a boil, let cool to ~80 °C.
3. Slowly add 120 g of pre-ground Biosource feeding stimulant to the ∼0.20(+) L of pre-boiled water while stirring. Stop stirring when all the solids are completely dissolved. The final Biosource 'serum' produced should have a volume of ∼0.3(+) L.
4. Spray all the prepared Biosource serum directly onto 10 kg of 1 mm / micro feed pellets while tumbling. Be sure to apply an even coat of serum over the pellets.
5. Mix the treated pellets well, then air dry for 45 - 60 minutes. Mix well again, then bag.

### Manufacturing Protocol for 10 kg x 3mm feed pellets -'SUMMER DOSE' (basic 'practical' dosage = 6.5 g Biosource per 1 kg feed pellet)

1. Pre-grind 60 g of the Biosource feeding stimulant into a fine powder, mix well.
2. Bring 0.10(+) L of water to a boil, let cool to -80 °C.
3. Slowly add 60 g of pre-ground Biosource feeding stimulant to the ~0.10(+) L of pre-boiled water while stirring. Stop stirring when all the solids are completely dissolved. The final Biosource 'serum' produced should have a volume of ∼0.15(+) L.
4. Spray all the prepared Biosource serum directly onto 10 kg of 3mm feed pellets while tumbling. Be sure to apply an even coat of serum over the pellets.
5. Mix the treated pellets well, then air dry for 30 - 45 minutes. Mix well again, then bag.

### Manufacturing Protocol for 10 kg x expander pellets -'WINTER HOOK BAIT DOSE' (basic 'practical' dosage = 60.5 g Biosource per 1 kg expander pellet)

1. Pre-grind 600g of the Biosource feeding stimulant into a fine powder, mix well.
2. Bring 1.0(+) L of water to a boil, let cool to -80 °C.
3. Slowly add 600 g of pre-ground Biosource feeding stimulant to the ∼1.0(+) L of pre-boiled water while stirring. Stop stirring when all the solids are completely dissolved. The final Biosource 'serum' produced should have a volume of ~1.5(+) L
4. Spray all the prepared Biosource serum directly onto 10 kg of expander pellets (any size) while tumbling. Be sure to apply an even coat of serum over the pellets.
5. Mix the treated pellets well, then air dry for -60+ minutes. Mix well again, then bag.

### Manufacturing Protocol for 10 kg x expander pellets-'SUMMER HOOK BAIT DOSE' (basic 'practical' dosage = 30.5 g Biosource per 1 kg expander pellet)

1. Pre-grind 300g of the Biosource feeding stimulant into a fine powder, mix well.
2. Bring 0.5(+) L of water to a boil, let cool to -80 °C.
3. Slowly add 300 g of pre-ground Biosource feeding stimulant to the ∼0.5(+) L of pre-boiled water while stirring. Stop stirring when all the solids are completely dissolved. The final Biosource 'serum' produced should have a volume of ∼0.75(+) L
4. Spray all the prepared Biosource serum directly onto 10 kg of expander pellets (any size) while tumbling. Be sure to apply an even coat of serum over the pellets.
5. Mix the treated pellets well, then air dry for -60+ minutes. Mix well again, then bag.
Note: Because expander pellets absorb - x2 as much water as feed pellets, they require x2+ as much Biosource. Also, since the expanders are typically used only as hook baits, they are given a stronger dose as standard - this makes for 'super stimulatory' hook baits that fish find irresistible! Since expander pellets require more Biosource than other types of pellet it is suggested that they be sold in -500g 'hooker' bags for the same price as the 750g bags of feed pellets.

### Manufacturing Protocol for 10 kg x 'GENERIC GROUNDBAIT ADDITIVE' (basic 'practical' dosage = 60 g Biosource per 1 kg groundbait additive)

Basic Recipe: Simply add 600 g powdered Biosource to 10 kg of dry groundbait additive (any kind of ingredient - fishmeal, crushed pellet etc.) - mix well and bag into 250 g packets.

### Manufacturing Protocol for 10 kg x `CRUSHED PELLET GROUNDBAIT ADDITIVE' (basic 'practical' dosage = 62.5 g Biosource per 1 kg crushed feed pellet)

1. Pre-grind 625g of the Biosource feeding stimulant into a fine powder, mix well.
2. Bring 1.1 (+) L of water to a boil, let cool to -80 °C.
3. Slowly add 625 g of pre-ground Biosource feeding stimulant to the ∼1.1(+) L of pre-boiled water while stirring. Stop stirring when all the solids are completely dissolved. The final Biosource 'serum' produced should have a volume of -1.7(+) L
4. Spray all the prepared Biosource serum directly onto 10 kg of 'smaller' (2 - 4mm range) feed pellets while tumbling. Be sure to apply an even coat of serum over the pellets.
5. Mix the treated pellets well, then air dry for ~60+ minutes. Mix well.
6. Crush the pellets to ~0.5 - 1 mm diameter, then bag into 250 g packets.
Notes: The above protocols each generate 40 x 250 g packets of 'groundbait additive' that should be added at a ratio of 1 x 250 g pack to 1kg commercial groundbait for a 'winter' or 'river' dose; or 125 g (½ x pack) to 1 kg commercial groundbait for a 'summer' dose.

### Manufacturing Protocol for 'WINTER' or 'RIVER' groundbait (25 kg bags) (basic 'practical' dosage = 12 g Biosource per 1 kg dry groundbait)

Basic Recipe: Simply add 300 g powdered Biosource to 25 kg of dry groundbait - mix well and bag.

### Manufacturing Protocol for 'SUMMER' groundbait (25 kg bags) (basic 'practical' dosage = 6 g Biosource per 1 kg dry groundbait)

Basic Recipe: Simply add 150 g powdered Biosource to 25 kg of dry groundbait - mix well and bag.

### Manufacturing Protocol for 10 kg x `PASTE' powder (basic 'practical' dosage = 12 g Biosource per 1 kg pellet powder)

Basic Recipe: Simply add 120 g powdered Biosource to 10 kg of finely ground high oil pellet* - mix well and bag.
Notes: The above protocol generates 10 kg of 'paste powder' that can then be further divided into smaller sized retail containers. The finished paste is simply made by adding water to the paste powder.
*It is recommended that high oil pellets (e.g. Halibut pellets) are used as a base ingredient, since high oil pellets give a finished paste of firmer consistency.

## Claims

1. A feeding stimulant for fish, comprising:
a host media having a porosity; and
an active mixture comprising an effective amount of L-Lysine hydrochloride (LYS HCl);
wherein the active mixture has a concentration in the host media at least 0.1 % w/w of LYS HCl such that the active mixture is released into an aqueous environment at a rate of at least 1, or 2 milligrams per minute when LYS HCl is a dominant amino acid in the host media.

2. The feeding stimulant of claim 1, wherein the active mixture is prepared using approximately 50 g LYS HCl powder, approximately 10 g monosodiumglutamate (MSG) and approximately 10 g sodium chloride (NaCL) per 100 mL water.

3. A method of preparing a feeding stimulant for fish, comprising the steps of:
forming an amino acid component from a powder of L-Lysine Hydrochloride (LYS HCl);
preparing a host media having a porosity with the amino acid component by impregnating the host media with a concentration of at least 0.1 % w/w of LYS HCl near a surface layer of the host media such that the amino acid is released into an aqueous environment at a rate of at least 1, or 2 milligrams per minute when LYS HCl is a dominant amino acid in the host media.

4. The method of claim 3, wherein the step of preparing the host media further comprises the steps of:
combining between 5-60g of LYS HCl with approximately 1.0 kg of host media;
forming the host media into a media product.

5. The method of claim 3, wherein the step of forming the amino acid component further comprises the step of:
forming a solution with a predetermined concentration of LYS, the solution comprising 50 g LYS HCl powder, 10 g monosodiumglutamate (MSG) and 10 g sodium chloride (NaCL) per 100 mL water.

## Patentansprüche

1. Stimulationsmittel für die Futteraufnahme von Fischen, aufweisend:
ein Träger-Medium mit einer Porosität; und
eine Aktiv-Mischung, die eine wirksame Menge an L-Lysin-Hydrochlorid (LYS HCl) aufweist;
wobei die Aktiv-Mischung eine Konzentration in dem Träger-Medium von mindestens 0,1 % w/w (Gewicht) an LYS HCl aufweist, derart, dass die Aktiv-Mischung in eine wässrige Umgebung zu einer Rate von mindestens 1 oder 2 Milligramm pro Minute freigegeben wird, wenn LYS HCl eine dominante Aminosäure in dem Träger-Medium ist.

2. Stimulationsmittel nach Anspruch 1, wobei die Aktiv-Mischung unter Verwendung von näherungsweise 50 g HYS-HCl-Pulver, näherungsweise 10 g Mono-Natriumglutamat (MSG) und näherungsweise 10 g Natriumchlorid (NaCL) pro 100 ml Wasser zubereitet ist.

3. Verfahren zum Zubereiten eines Stimulationsmittels für die Futteraufnahme von Fischen, aufweisend folgende Schritte:
Bilden eines Aminosäure-Bestandteils aus einem Pulver von L-Lysin-Hydrochlorid (LYS HCl);
Fertigen eines eine Porosität aufweisenden Träger-Mediums mit dem Aminosäure-Bestandteil durch Imprägnieren des Träger-Mediums mit einer Konzentration von mindestens 0,1 % w/w (Gewicht) an LYS HCl nahe einer Oberflächenschicht des Trägermediums, derart, dass die Aminosäure in eine wässrige Umgebung zu einer Rate von mindestens 1 oder 2 Milligramm pro Minute freigegeben wird, wenn LYS HCl eine dominante Aminosäure in dem Träger-Medium ist.

4. Verfahren nach Anspruch 3, wobei der Schritt einer Fertigung des Träger-Mediums ferner die Schritte aufweist:
Kombinieren von zwischen 5 - 60 g an LYS HCl mit näherungsweise 1,0 kg des Träger-Mediums;
Bilden eines Medium-Produktes aus dem Träger-Medium.

5. Verfahren nach Anspruch 3, wobei der Schritt eines Bildens des Aminosäure-Bestandteils ferner die Schritte aufweist:
Bilden einer Lösung mit einer vorbestimmten Konzentration an LYS, wobei die Lösung 50 g LYS-HCl-Pulver, 10 g Mono-Natriumglutamat (MSG) und 10 g Natriumchlorid (NaCL) pro 100 ml Wasser aufweist.

## Revendications

1. Stimulant alimentaire pour poisson, comprenant :
un milieu hôte ayant une porosité ; et
un mélange actif comprenant une quantité efficace d'hydrochlorure de L-lysine (LYS HCl) ;
dans lequel le mélange actif a une concentration dans le milieu hôte d'au moins 0,1 % p/p de LYS HCl de sorte que le mélange actif est libéré dans un environnement aqueux à une vitesse d'au moins 1 ou 2 milligrammes par minute lorsque le LYS HCl est un acide aminé dominant dans le milieu hôte.

2. Stimulant alimentaire selon la revendication 1, dans lequel le mélange actif est préparé en utilisant approximativement 50 g de poudre de LYS HCl, approximativement 10 g de glutamate monosodique (MSG) et approximativement 10 g de chlorure de sodium (NaCl) par 100 ml d'eau.

3. Procédé de préparation d'un stimulant alimentaire pour poisson, comprenant les étapes de :
former un composant d'acide aminé à partir d'une poudre d'hydrochlorure de L-lysine (LYS HCl) ;
préparer un milieu hôte ayant une porosité avec le composant d'acide aminé en imprégnant le milieu hôte avec une concentration d'au moins 0,1 % p/p de LYS HCl près d'une couche de surface du milieu hôte de sorte que l'acide aminé est libéré dans un environnement aqueux à une vitesse d'au moins 1 ou 2 milligrammes par minute lorsque le LYS HCl est un acide aminé dominant dans le milieu hôte.

4. Procédé selon la revendication 3, dans lequel l'étape de préparation du milieu hôte comprend en outre les étapes de :
combiner entre 5 et 60 g de LYS HCl avec approximativement 1,0 kg de milieu hôte ;
former le milieu hôte dans un produit de milieu.

5. Procédé selon la revendication 3, dans lequel l'étape de formation du composé d'acide aminé comprend en outre l'étape de :
former une solution avec une concentration de LYS prédéterminée, la solution comprenant 50 g de poudre de LYS HCl, 10 g de glutamate monosodique (MSG) et 10 g de chlorure de sodium (NaCl) par 100 ml d'eau.
